# EUROPEAN PATENT APPLICATION

(11) **EP 1 316 374 A1**
(43) Date of publication of application: **04.06.2003**
(21) Application number: 02026228.3
(22) Date of filing: 26.11.2002
(51) Int. Cl.: B23B 13/04

(54) **Automatic bar feeder for multispindle lathes**

(30) Priority: 30.11.2001 IT MI20012537
(71) Applicant: PIETRO CUCCHI S.p.A., 20060 Bussero (Milano) (IT)
(72) Inventor: Cucchi, Pietro, 20060 Bussero (MI) (IT)
(74) Representative: Faraggiana, Vittorio, Dr. Ing.

(57) **Abstract**

An automatic bar feeder for automatic multispindle lathes comprises a revolving drum (12) supporting guides (15) for the running of bars to take them in succession into positions of advancement and machining in a lathe. The guides (15) are equipped with a running bar pusher (17) powered with a hydraulic motor (18) for running of the bars therein. The feeder (10) comprises a first sensor unit (21) which emits signals which are a function of the position of an advancing bar. The signal is received by a control device (23) which commands a proportional flow rate valve (24) for fluid feed to the hydraulic motor to control the movement of the bar by feedback.

## Description

The present invention relates to an automatic feeder of the type employed for feeding bars to be machined in multispindle lathes.

In the prior art there are known automatic feeders comprising a revolving drum supporting parallel guides for the running of bars to be fed. The drum rotates like a revolver to follow the movement of the lathe spindle and carry the bars sequentially into the various stations of the lathe. Along the guides of the loader run the bar pushers which grasp the tail of the bar in the guide to feed it into the lathe.

Normally the hydraulic motors are fed at appropriate moments to cause the respective bar to advance. Control of the amount of bar fed is done by provision of movable ledges or stops along the guide and within the lathe. In this manner, after the stop member has been commanded to arrange itself in the correct position the hydraulic motor is fed for a preset time sufficient to bring the bar head against the stop member. Then the stop member withdraws and the collet of the spindle of the lathe can close on the bar and the corresponding machining can begin.

The problems of this system are however various. Indeed, first of all thin bars can bend when they impact against the stop and therefore the bar advances more than wanted. Contrariwise, large heavy bars can suffer from problems of bouncing off the stop with the result that the bar is grasped in the wrong position with the work insufficiently advanced.

In addition, the change in the amount of advancement cannot be done easily during use of the lathe and it is necessary to move the stops manually.

Lastly, although as mentioned the system can advance the bar erroneous amounts, there is no way for the lathe or the loader to detect the erroneous advance. The work produced must then be checked after machining for rejection of parts which are too long or too short. This involves both much lost time due to the machining done uselessly and the need of subsequent sorting and useless material costs because of the work already machined but which must be rejected.

The general purpose of the present invention is to remedy the above mentioned shortcomings by making available an automatic feeder which would allow accurate feeding of the bar, close watch of the correct advancement and automatic rejection of the work and/or automatic alarm in case of feed errors.

In view of this purpose it was sought to provide in accordance with the present invention an automatic bar feeder for automatic multispindle lathes comprising a revolving drum supporting guides for the running of bars to be fed to take them in succession into positions of advancement and machining of the bars with the guides being equipped with a running bar pusher powered with a hydraulic motor for running of the bar therein characterized in that it comprises a first sensor unit which emits signals which are a function of the position of an advancing bar with said signals being received by a control device which commands a proportional flow rate valve for fluid feed to the hydraulic motor to control the movement of the bar by feedback.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic view of a loader in accordance with the present invention,
FIG 2 shows a block diagram of the control system of the loader of FIG 1,
FIG 3 shows a diagrammatic perspective view of an alternative embodiment of a revolving distributor assembly for the loader of FIG 1, and
FIG 4 shows a block diagram of a position detection system associated with the distributor assembly of FIG 3.

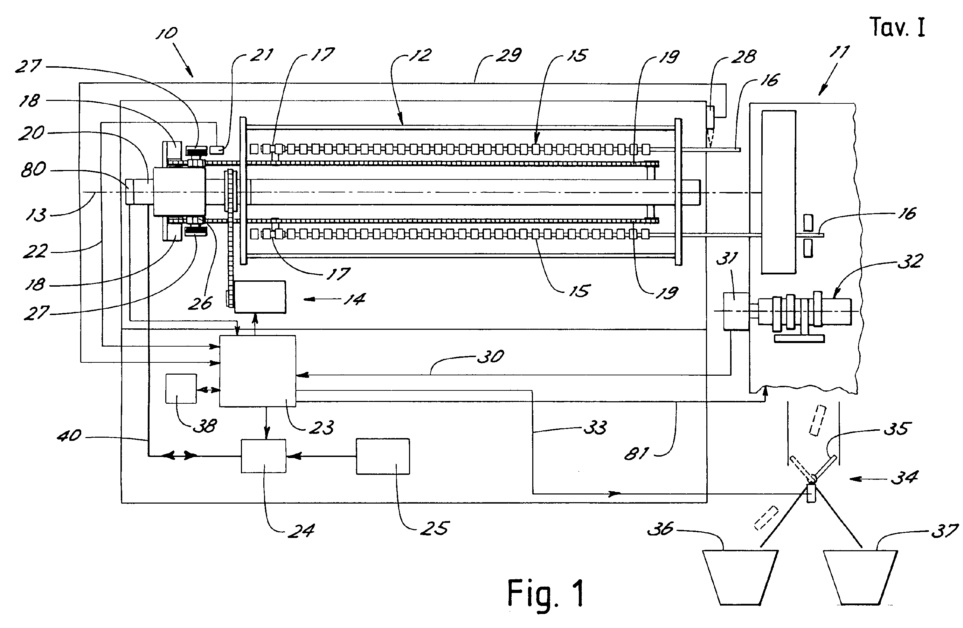

With reference to the figures, FIG 1 shows diagrammatically a feeder in accordance with the present invention indicated as a whole by reference number 10 coupled to a multispindle lathe indicated as a whole by reference number 11 and shown only partially in the figure as it is virtually known and readily imaginable to those skilled in the art.

The automatic feeder 10 comprises a castle or drum 12 which revolves around the axis 13 upon command of a motor drive 14. The drum 12 supports a plurality of guides 15 arranged around the axis 13 for running of bars 16 to be fed to the lathe.

For the sake of simplicity, only two diametrically opposed guides are shown in the figure. In accordance with a prior art there will be in reality several guides arranged equally spaced around the axis.

The drum revolves to bring the bars in succession into known positions of advancement and machining of the bars.

The guides 15 (for example of the known type with elastically pliable segments openable on command) are equipped with a running bar pusher 17 which is powered with a hydraulic motor 18 through a chain transmission 19 for running of the bars in the guides.

To feed the fluid to the hydraulic motors 18 there is a known rotating distributor 20 arranged behind the drum to which lead the ducts 40 for oil delivery and drain.

The feeder 10 comprises a first sensor 21 which emits a signal 22 which is a function of the position of the pusher and therefore of a bar being fed.

The signal 22 is received by a control device 23 advantageously comprising an appropriately programmed industrial computer which commands a proportional flow valve 24 which feeds the fluid coming from a hydraulic control unit 25 to the hydraulic motor for feedback control of the movement (speed and/or position) of the bar.

Advantageously to obtain the signal 22 the sensor detects the running of the chain of the bar pusher. To do this it was found particularly advantageous to use a gear wheel 26 for each advancement chain 19. The gear wheel is connected kinetically to a disk 27 which has peripheral markers detected by the sensor 21. For example, the sensor assembly 21, 27 can be a "phonic wheel", an encoder, a magnetic rotary system, et cetera. The type of technology employed by the sensor can be optical, magnetic et cetera.

In the embodiment shown in FIG 1 each bar pusher has its own disk 27 permanently engaged with the chain and the sensor 21 is arranged fixed in a position for advancment of the bars of the revolving drum and couples with the disk of a bar pusher when the drum revolves to take the assembly made up of a guide and the respective bar pusher into the advancement position. With the sensor stationary, problems of connection of the sensor with the control device are avoided.

Again advantageously, the feeder has a second sensor 28 arranged near the outlet of the bars from the loader for detection of the passage of the head of a bar through a predetermined advancement position. The sensor is advantageously an optical sensor arranged directly above the zone of passage of the advancing bar so that the reading will not be influenced by the bar diameter. Indeed, if the reading were lateral the position of the bar axis would vary depending on the bar diameter and therefore, especially with bar vibrations, the bar could leave the sensor reading angle.

The second sensor 28 sends to the control device a sensing signal 29 of detection of the passage of the bar head to constitute the zero reference for the position signal emitted by the first sensor 21. In other words, after loading of a bar in the guides the device 23 advances the corresponding bar pusher until the bar head is detected with precision by the sensor 28. From that moment the bar advancement or withdrawal measurements of the sensor 21 give the exact measurement of the position of the bar head with respect to the zero point given by the sensor 28. Knowing with precision the position of the sensor 28 with respect to the lathe it is possible to feed with extreme accuracy the bar into the lathe and stop it exactly in the positions established for the programmed machining. The combined use of the sensors 28 and 21 also allows making accurate measurement of the bar length.

Again advantageously, the control device has another inlet 30 for reception of a synchronism signal with the machining operations of the lathe to be served. This synchronism signal can be supplied by the lathe itself or, as shown in the figure, can be produced by an absolute position detector 31 which is constrained to selected moving parts of the lathe which are indicative of the operations with which it is desired to synchronize the feeder. In the example shown it was found advantageous to connect the detector 31 to the cam shaft 32 which commands the succession of machining operations in the lathe.

Thanks to the synchronism produced by the signal 30 it is possible for the control device 23 to command the movement of the bars in relation to the various operations accomplished by the lathe. For example, thanks to the synchronism signal the control device knows when the lathe opens the spindle collets and hence when the bar is freed for the next precision feeding. In addition, with the sensor 30 the control device has information on the position of the lathe stations.

The control device of the loader can also be connected to the known lathe control device (not shown) for sending signals 81 for commanding parameters of operation and functions of the lathe such as opening and closing time of the collet et cetera to achieve integrated management of the loader & lathe assembly. This allows for example making use of the advantages of speed of the innovative loader realized in accordance with the present invention to optimize lathe cycle times.

For perfect synchronism between the lathe and the loader another sensor 80 can be provided for detection of the absolute position of the loader around its own rotation axis. Thus is had the additional information on any angular phase displacement between the lathe and the loader.

In the prior art employing stops for stopping bar feeding the hydraulic motors are always in condition of thrust and the bar advances without control up to the stop each time the spindle is opened.

Again advantageously, the control device 23 has an outlet 33 which emits a warning signal when thanks to the signal emitted by the first sensor 21 bar feeding different from a preset measurement is detected, especially if less. In other words the signal 33 warns that it wasn't possible to feed the bar by the amount required by the machining for example because of an impediment (among which in the worst case is blocking of the collet in the closed position) or merely approaching of the bar end. This avoids making work out of measurement.

The warning signal can also control a selector device 34 for rejection of the product being machined on the end of the bar which was fed less than the preset measurement. As may be seen in FIG 1 the selector device can comprise a deflector which addresses the work coming out of the lathe either to a collector of good work 36 or a collector of rejected work 37. Manual sorting of the work is thus avoided.

The fact that all movements are accurately monitored by the control system 23 also allows adjustment of the movements as historical memory of the operation of the feeder. For this purpose the control device 23 has a memory 38 in which are memorized at least the movements made by the bar pushers. In case of malfunction, production errors or the like it is thus possible to go back over the operations which preceded or generated the defect.

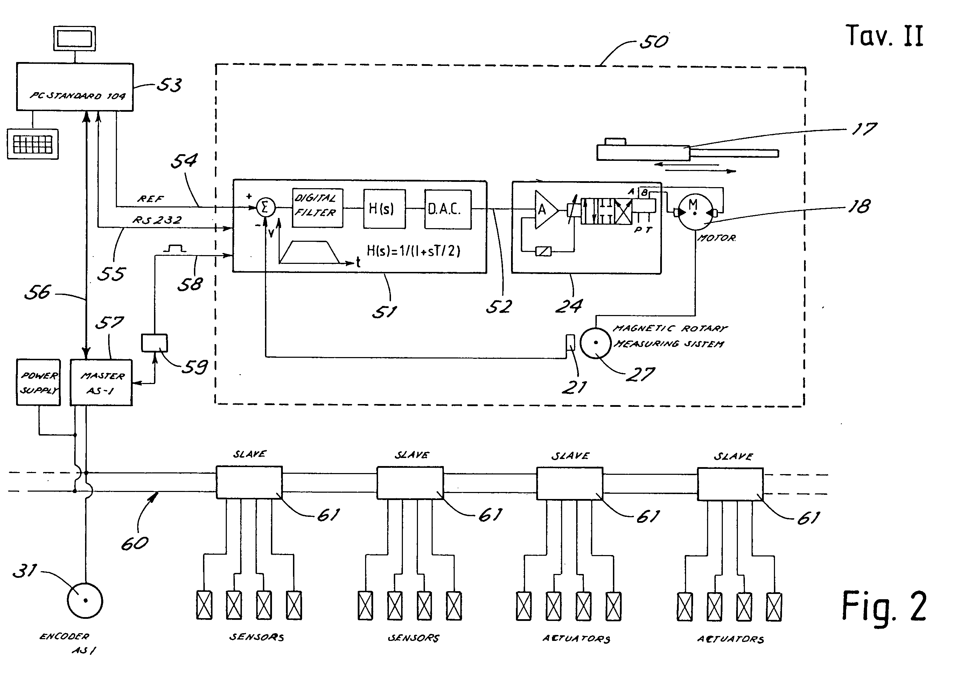

FIG 2 shows the block diagram of the control system 23 of the loader.

For the sake of simplicity only one hydraulic motor 18 controlling the movement of one of the bar pushers 17 is shown.

The control system comprises a position feedback control block 50 comprising in turn a circuit 51 which realizes the control law and based on the signals received from the position sensor 21 and the external control signals 54, 55, 58 supplies a signal 52 for control of the proportional valve 24.

The external signals comprise a reference signal 54 and control signals 55 which arrive from a microprocessor control system advantageously realized with industrial computers 53 equipped with keyboards and displays. The computer 53 performs high level calculations, receives the commands from the operator and commands the block 50 by sending it the movement instructions. The block 50 then performs the movement instructions by appropriately commanding the proportional valve 24 on the basis of the parameters set and the feedback signals produced by the sensor 21.

The block 50 also receives a signal 58 which supplies precise information in real time on the times in which the lathe collet is in open or closed position. This information is very important for ensuring that the bar movement command takes place only with the collet open and makes full use of the open time which is generally very short.

The signal 58 is produced by a circuit 59 which receives synchronism signals produced by the sensor 31 arranged on the lathe camshaft.

As may be seen in FIG 2, it was found advantageous to use an industrial bus to reduce the electrical wiring harness between the various parts of the loader and to ensure greater flexibility and expandability of the system.

For this purpose the computer 53 is connected through a command and control line 56 to a master AS-i 57 (AS-i is a well known industrial standard) which manages the signals on an AS-i bus 60. On the bus 60 are connected a plurality of AS-i slaves 61 which manage all the sensors and actuators of the loader.

On the bus 60 is also connected a sensor unit (for example an absolute encoder 31) which realizes the above mentioned sensor which supplies synchronization with the lathe.

The use of the bus AS-i allows reduction to a single wire of the connection between the control unit and the sensors and actuators scattered through the machine. In addition to the economy in the initial assembly this allows easier and faster maintenance of the loader or addition of other sensors and/or actuators.

As may be seen in the diagram of FIG 2 the circuit 59 which produces the synchronism signals with the lathe collet is connected directly to the bus 60 without passing through the master 57 so as to detect and process more quickly the synchronism signals of the encoder. This allows having a very reliable signal 58. Indeed, it is essential that the bar movement control system react with the maximum timing upon opening of the collet so as to make the best use of the short time available. Delayed advice of the opening of the collet could cause the system to not succeed in completing the movement before the next closing of the collet.

The position detection device described above allows movement of the bars only near a single position in which the fixed sensor 21 is provided. This allows keeping the position detection system simple even if the bar revolving time is wasted. Indeed, with this solution, during rotation of the pushers they must necessarily be kept locked by closing of the hydraulic motor supply circuit to avoid any unnoticed movements of the pushers when such movements are not detectable by the sensor and therefore by the feedback control system.

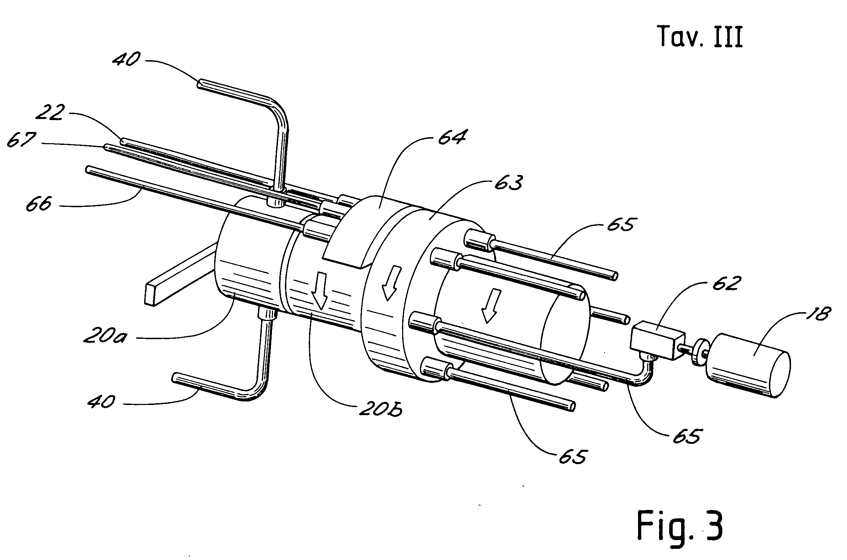

FIG 3 shows diagrammatically a variant on the position detection system. In this variant each motor 18 has its own position encoder 62 always connected mechanically to the motor. For the sake of simplicity the figure shows a single motor and a single encoder. All the encoders are connected through connections 65 to a first transmitting and receiving unit 63 revolving with the revolving part 20b of the motor control fluid distribution unit 20.

The first transmitting and receiving unit 63 communicates with a second transmitting and receiving unit 64 fixed to the floor and which emits the position signals 22 which are sent to the position control system.

Advantageously the transmitting and receiving sustem is the electromagnetic induction type and the two transmitting and receiving units have facing couplings at a short distance at least in one arc of the rotation. For this purpose the fixed unit 64 can be mounted on the fixed part 20a of the revolving distributor 20.

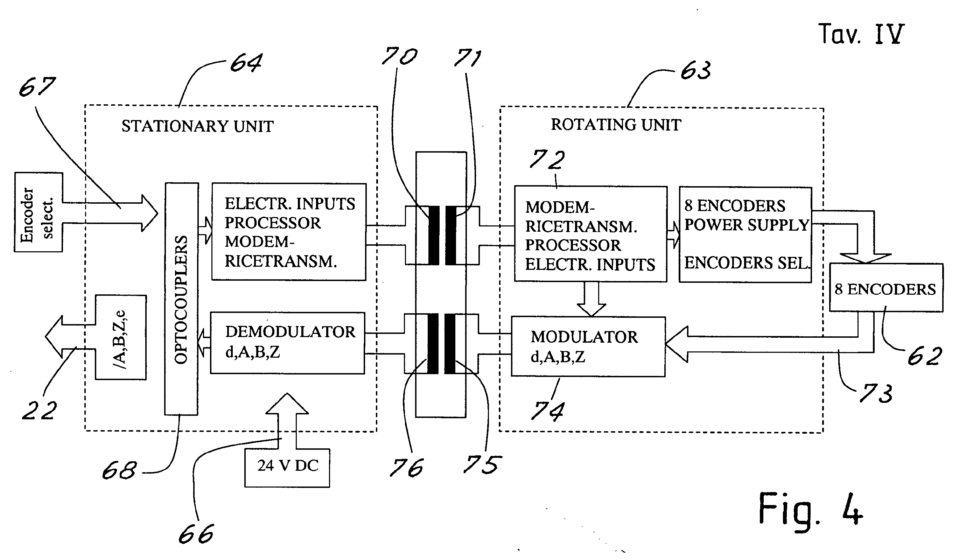

FIG 4 shows a block diagram of the position detection system of FIG 3. The fixed unit 64 receives an electric power supply 66, control signals 67 (for example selection signals of the encoder the control system wants to read) and emits the position signals 22 directly to the control unit 23. The signals 22 and 67 are advantageously disconnected by means of optocouplers 68.

The input signals 67 are sent to an induction transmission unit 69 which with these signals modulates a carrier which is applied to the primary winding 70 of a first induction transmission coupling. The secondary winding 71 of this induction transmitting coupling is in the revolving part 63 and is connected to an induction reception unit 72 which demodulates the signals and processes them to perform the commands contained therein. The induction transmission realized is "powered" meaning that the signal induced in the winding 71 is such as to allow taking therefrom in addition to the information transmitted the electrical power for the entire revolving transmitter and for the encoders.

The position signals 73 produced by the encoder are sent to a transmitter or modulator unit 74 which pilots the primary winding 75 of a second induction transmitting coupling. The secondary winding 76 of the second induction transmitting coupling is in the fixed part 64 and is connected to an induction reception unit 77 which demodulates the received signals and thus produces the signals 22.

Thanks to the continuous detection of the movement of the motors it is possible to move the pushers to any desired point of the drum rotation. More feedback control units 50 can also be provided for moving several pushers simultaneously. In this manner the times can be optimized and complex movements can be realized.

The induction receiving and transmission system can also comprise detection of the angular position of the loader around the axis so as to realize the sensor 80 by itself.

It is now clear that the predetermined purposes have been achieved by making available a loader having innovative characteristics, high precision and enormously improved flexibility of use.

In addition, the loader in accordance with the present invention while having characteristics much more advanced than prior art loaders has a relatively low cost of embodiment thanks to the considerable reduction in the wiring made possible by the use of a bus system.

Naturally the above description of an embodiment applying the innovative principles of the present invention is given by way of non-limiting example of said principles within the scope of the exclusive right claimed here.

## Claims

1. Automatic bar feeder for automatic multispindle lathes comprising a revolving drum supporting guides (15) for the running of bars to be fed to take them in succession into positions of advancement and machining of the bars with the guides being equipped with a powered running bar pusher (17) with a hydraulic motor (18) for running of the bars therein **characterized in that** it comprises a first sensor unit (21,27,62,63,64) which emits signals (22) which are a function of the position of at least one bar in advancing with said signals (22) being received by a control device (23) which commands a proportional flow rate valve (24) for fluid feed to the hydraulic motor (18) to control the movement of the bar by feedback.

2. Feeder in accordance with claim 1 **characterized in that** each bar pusher is moved by a chain (19) engaged with the hydraulic motor with there also being engaged with the chain a gear wheel (26) for rotation of a disk (27) with peripheral markers which are detected by said sensor to supply the position of the bar engaged with the bar pusher.

3. Feeder in accordance with claim 2 **characterized in that** each bar pusher has its own disk and the sensor is arranged fixed in a position of advancement of the bars of the revolving drum and couples with the disk of a bar pusher when said drum revolves to take the assembly made up of a guide and the respective bar pusher in to the feeding position.

4. Feeder in accordance with claim 1 **characterized in that** it comprises a second sensor for detection of the passage through a preset position of advancement of the end of an advancing bar being fed with said second sensor sending a signal to the control device to constitute a zero reference for the position signal emitted by the first sensor.

5. Feeder in accordance with claim 4 **characterized in that** the second sensor is an optical sensor arranged directly above the zone where the advancing bar passes.

6. Feeder in accordance with claim 1 **characterized in that** the control device has an inlet for reception of a signal of synchronism with the machining operations of the lathe to be served.

7. Feeder in accordance with claim 6 **characterized in that** the synchronism signal is produced by a position detector designed to be constrained to selected moving parts of the lathe indicative of the operations with which it is desired to synchronize the feeder.

8. Feeder in accordance with claim 1 **characterized in that** the control device has an output which emits a warning signal when the signal emitted by the first sensor indicates advancement of a bar different from and in particular smaller than a preset measurement.

9. Feeder in accordance with claim 1 **characterized in that** said warning signal controls a selector device for rejection of the product being machined on the end of the bar which had said advancement different from the preset measurement.

10. Feeder in accordance with claim 1 **characterized in that** the control device has a memory in which are memorized the movements made by the bar pushers.

11. Feeder in accordance with claim 1 **characterized in that** the hydraulic motors are fed through a revolving distributor which is arranged behind the revolving drum.

12. Feeder in accordance with claim 1 **characterized in that** the control device comprises a microprocessor control system (53) and a position feedback control circuit (50) with the control circuit receiving said signals which are a function of the position and commanding the proportional valve with said circuit receiving reference and control signals for the movements of said control system.

13. Feeder in accordance with claim 12 **characterized in that** the microprocessor control system is an industrial computer.

14. Feeder in accordance with claim 12 **characterized in that** the microprocessor control system is connected to a master of a bus on which are connected control slaves of actuators and sensors for management of the operation of the feeder.

15. Feeder in accordance with claim 14 **characterized in that** the bus is the AS-i type.

16. Feeder in accordance with claims 7 and 14 **characterized in that** on the bus is connected an absolute encoder (31) which realizes said position detector for selected moving parts of the lathe.

17. Feeder in accordance with claim 12 **characterized in that** to the feedback position control circuit (50) is also sent a signal (58) containing the collet open or collet closed information with said signal indicating in real time to the circuit the position of the collet of the lathe served by the feeder.

18. Feeder in accordance with claims 7 and 17 **characterized in that** the collet open or collet closed signal (58) is produced by a circuit which receives at input a signal from said position detector (31) designed to be constrained to selected moving parts of the lathe.

19. Feeder in accordance with claim 1 **characterized in that** said first sensor comprises a first transmission unit (74) revolving with said revolving drum and connected to encoders for detection of the movement of the hydraulic motors and a first reception unit (77) fixed on the floor with the transmission unit transmitting to the reception unit the position signals detected by the encoders (62) and the reception unit sending to the control device the position signals received.

20. Feeder in accordance with claim 19 **characterized in that** said first sensor comprises another transmission unit (69) fixed on the floor and another reception unit (72) revolving with the drum with the transmission unit receiving commands from the control device and transmitting said commands to the reception unit revolving with the drum.

21. Feeder in accordance with claims 19 or 20 **characterized in that** transmission between the transmission and reception units takes place by electromagnetic induction with the two units comprising respectively a primary winding (70,75) and a secondary winding (71,76) which move a short distance during revolving of the drum.

22. Feeder in accordance with claims 19 or 20 **characterized in that** the encoders, transmission units and reception units revolving with the drum are powered by a unit fixed to the floor by means of electromagnetic induction.

23. Feeder in accordance with claim 21 **characterized in that** the feeding unit is the said additional transmitting unit (69) fixed to the floor.

24. Feeder in accordance with claim 1 **characterized in that** each pusher (17) has a hydraulic motor (18) and that the sensor unit has a position encoder (62) for each hydraulic motor.

25. Feeder in accordance with claim 1 **characterized in that** there is a sensor (80) for detection of the angular position of the drum around the lathe axis for control of the loader phase with respect to the lathe.

26. Feeder in accordance with claim 1 **characterized in that** the proportional valve is connected sequentially to the hydraulic motors of the bar pushers through a revolving hydraulic distributor (20).

27. Feeder in accordance with claim 1 **characterized in that** the loader control device sends control signals to a lathe connected to it to command its operational parameters such as collet opening and closing times.
